(19) Europäisches Patentamt
European Patent Office
Office européen des brevets

(11) Publication number: **0 125 560**
**A2**

# (12) EUROPEAN PATENT APPLICATION

(21) Application number: 84104928.1

(22) Date of filing: 03.05.84

(51) Int. Cl.³: G 01 N 27/30

(30) Priority: 11.05.83 US 493448

(43) Date of publication of application: 21.11.84 Bulletin 84/47

(84) Designated Contracting States: DE FR GB

(71) Applicant: International Business Machines Corporation
Old Orchard Road
Armonk, N.Y. 10504(US)

(72) Inventor: Karagounis, Vasilios Andreas
211 LaFayette Rd
Apt 506, Syracuse New York 13205(US)

(72) Inventor: Leary-Renick, Pamela Anne
619 Chelsea Cay
Wappingers Falls New York 12590(US)

(72) Inventor: Romankiw, Labomyr Taras
7 Dunn Lane
Briarcliff Manor New York 10510(US)

(74) Representative: Lancaster, James Donald
IBM United Kingdom Patent Operations Hursley Park
Winchester, Hants, S021 2JN(GB)

## (54) Stoichiometric metal oxide electrode.

(57) A pH monitoring electrode comprises a substrate coated with an outer stoichiometric sputtered film of PdO, the substrate being glass coated with Pd.

EP 0 125 560 A2

Croydon Printing Company Ltd.

0125560

# STOICHIOMETRIC METAL OXIDE ELECTRODE

## BACKGROUND OF THE INVENTION

### Field of the Invention

The present invention relates to electrodes for electrochemical applications such as pH monitoring electrodes.

### Description of Related Art

Liu, Bocchicchio, and Overmyer, "A Palladium-Palladium Oxide Minature pH Electrode", Science Vol. 207, pp 188-189 (11 Jan 1980) describes use of such an electrode produced by means of oxidation of Pd to produce a wire with a velvety black appearance by means of anodic treatment in an electrochemical bath. The PdO/Pd wire pH electrode was fabricated by oxidizing Pd anodically in a molten $NaNO_3$ solution. The PdO/Pd electrode was used as a pH sensor when its potential was measured with respect to a standard liquid junction Ag/AgCl electrode.

Betteridge and Rhys, "The High-temperature Oxidation of the Platinum Metals and Their Alloys" Metallic Corrosion, First International Congress on Metallic Corrosion, pp 186-192 describes how to oxidize platinum by means of heating in air or oxygen to form a thin film of the oxide on the platinum substrate. It states that platinum has a high affinity for oxygen which is only readily observable on finely divided powders (P. 196, Col. 2, second paragraph). It was demonstrated that a thin PdO surface film forms when Pd metal is heated in air at 973 degrees K in air. Such a film is too thin to form a stable electrode.

Maissel & Glang "Handbook of Thin Film Technology" in chapter 7 "Reactive Sputtering", "Oxide Systems" states at 4-28, last full paragraph that for many oxide systems where oxygen is added to a glow discharge in argon gas, that "for complete reactive sputtering to occur, it is not necessary

to perform the sputtering in pure oxygen, and sputtering ambient consisting of argon containing only 1 or 2% oxygen can produce the same product as pure oxygen." It refers to copper oxides and states later, "By keeping the percentage of oxygen down to the minimum required for the complete oxidation of the depositing film, a substantial increase in the deposition rate can be obtained."

However, the article states that while that was true for copper and tantalum oxides formed by sputtering, it is not true of lead-titanium oxides.

A review of the prior art cited by Vossen & Cuomo and Maissel & Glang makes it clear that most of the metals in the middle of the periodic chart have been reactively sputtered. The exceptions include osmium which forms a deadly poisonous oxide, ruthenium (Cuomo et al, "Electrochemical, $RuO_2$-Based Light Switch" IBM Technical Disclosure Bulletin, Vol. 24, No. 1B, pages 763-764, (June 1981)), and Rh, Re and Pd plus Cr, Hg and Tl, Ga and Ge. Thus it would appear after all this time that a problem may have arisen with the sputtering of these metals.

United States patent No. 4,201,649 mentions sputtering of metals but it does not mention Pd. It does not mention reactive deposition or stoichiometrically depositing metals.

United States patent No. 3,272,725 of Garst describes a sensing electrode in an electrochemical oxygen sensing concentration measuring system. The sensing electrode is composed of palladium or another precious metal.

United States patent No. 4,258,984 of Beni et al dated March 31, 1981 describes a film of iridium dioxide (Ir is element 77 in the transition metal group, Group VIII on the periodic chart). The iridium dioxide is formed by sputtering in argon and oxygen. A film of 50 to 500 nm of iridium oxide was formed. The iridium dioxide surface is employed as the surface of an electrochromic electrode.

United States patent No. 3,711,385 of Beer suggests use of a platinum metal oxide layer. A platinum metal (according to that patent) includes Pt, Ir, Rh, Pd, Ru and Os. The metal oxide is used to coat the exterior of an electrode whose core is composed of a film forming metal. A film forming metal consists of Ti, Ta, Zr, Nb, W and alloys thereof.

An important improvement in the electrode is that because of the stoichiometric nature of the electrode, which was discovered in development of this invention, it was found that far more accurate measurements were possible than with the films of PdO which had been formed by oxidation of a surface of Pd. Thus an unexpected result has been achieved.

This improvement results because a pure PdO of stoichiometric composition is obtained, and because the film is stoichiometric throughout the total thickness of the film. Furthermore the reactively sputtered films are made very pure and very thick thus assuring excellent electrochemical potential reproducibility from run to run. Because of the large thickness of the film deposited, the device exhibits a uniform potential throughout its long life due to the constant ratio of oxygen to palladium through the thickness of the films.

Prior types of films which were produced by high temperature oxidation are very thin and exhibit variation in composition from the surface toward the substrate. This results in a continuous change of the electrochemical potential with respect to a standard electrode resulting in an erroneous pH reading. Films formed by molten salt anodizing are thin, exhibit an oxygen concentration profile from the surface of the film to the substrate and are usually contaminated by varying amounts of the $NO_3$ ion which gives a variable and erroneous reading with respect to a standard electrode cell, such as an Ag/AgCl cell.

## SUMMARY OF THE INVENTION

In a system in accordance with this invention, a pH monitoring electrode is used for pH monitoring when the potential is measured relative to a standard reference electrode. The pH monitoring electrode is coated with a film of a metallic oxide of a metal selected from the group consisting of Pt, Rh, Re, Ir, Pd, Os, Rb, Re, Ru, Mo and W or alloys thereof with themselves or with other metals. The improvement comprises the pH electrode having an exterior surface comprising a thin film of said metallic oxide.

Preferably, the pH monitoring electrode includes a film which has been deposited by sputtering in a reactive atmosphere rich in oxygen.

Preferably, the metallic oxide is a stoichiometrically pure metallic oxide, either a pure monoxide i.e., MeO or a pure dioxide $MeO_2$ or a similar oxide ($Me_xO_y$ where x and y are positive integers, and Me is a metal) with a well defined Me to O ratio which stays constant throughout the thickness of the film and over the entire area of the electrode.

The foregoing and other objects, features and advantages of the invention will be apparent from the more particular description of the preferred embodiments of the invention, as illustrated in the accompanying drawings.

## BRIEF DESCRIPTION OF THE DRAWINGS

The drawing shows a two electrode electrochemical system incorporating a stoichiometric film on a substrate in accordance with this invention.

## DESCRIPTION OF THE PREFERRED EMBODIMENT

A system using a stoichiometric metallic oxide film in accordance with this invention is shown in the drawing.

Such a stoichiometric electrode 11 is shown in a container 10 holding an electrolyte 30. Electrode 11 and electrode 20 are within electrolyte 30. Electrode 11 is connected to electrode 20 by a high impedance circuit in accordance with the state of the art. Electrodes 11 and 20 are both composed of films deposited on substrates 12 and 21 respectively which are composed of a smooth, inert, nonconductive material such as glass, Si with a thin film of glass, aluminum oxide, or another similar substrate.

Preferably, the two substrates 12 and 21 are composed of the same material for the purpose of providing matched chemical and mechanical properties (such as expansion) and to reduce the number of potential chemical contaminants in the electrolyte. In the case of the PdO electrode 11, the next layer 13 is an optional layer of Pd. On top of layer 13 is deposited a thin layer 14 of PdO which is stoichiometric. Therefore it is of uniform composition throughout its thickness. As an alternative to PdO one can employ stoichiometric metallic oxides selected from the group consisting of Ir, Mo, Os, Pd, Pt, Rb, Re, Rh, Ru and W or alloys thereof with each other and with other metals.

The other electrode 20 comprises the substrate 21 described above coated with a thin film 22 of Ag coated with a thin film 23 of AgCl.

The entire assembly of the two electrodes 11 and 20 is submerged in a solution 30 to be tested. The solution can be a physiological fluid such as blood, urine or perspiration. It is possible that the electrolyte is a moist surface of the skin of a person or sample of skin to be tested. Alternatively, the fluid can be an industrial effluent, sludge, sewage, water or soil, etc.

This electrode is useful in a measuring system in which an electrode is used for pH monitoring when the potential is measured relative to a standard liquid junction Ag/AgCl electrode or any other suitable standard electrode such as Ag/AgO, etc. In such a system, the electrode used as a pH sensor has a sensitivity of 55 to 59mv/pH which is independent of the type of substrate ($Si/SiO_2$ or $Al_2O_3$ ceramic) on which the PdO is

deposited, e.g. $SiO_2/Si$, a thin film of $Pd/SiO_2$ or Pd/ceramic. The substrate need not be a $SiO_2/Si$ or $Al_2O_3$, it can also be a different material including a number of polymers. We have found that the sensitivity of the sensor is fairly stable in view of the stoichiometry of the film and the thickness of the PdO. It can be made substantially thicker than the thickness of films which can be obtained by means of air oxidation or anodic oxidation in molten salt as described in Liu et al above.

In the past, it has been a problem to provide a film of PdO which is thick enough to be effective, because the thinner films used previously had been consumed too rapidly during use in acid or in an alkaline solution. Here a miniature pH electrode has an exterior surface comprising a thin film of PdO. It is adapted for use in an electrochemical measuring system employing pH monitoring in biomedical applications or industrial applications where very small electrodes are preferred or in the case of biomedical measurement within the body of a patient where smallness is mandatory to minimize the size of the incision for the catheter. In this improved version the electrode is thicker because it has been deposited by sputtering in a reactive atmosphere rich in oxygen. It was discovered that the oxide of PdO produced in this way is stoichiometrically pure. This unexpectedly led to higher reproducibility, accuracy of measurements with the pH electrode, and no drift during measurement because of the constant oxygen concentration through the thickness of the oxide film.

It was further discovered as part of this invention that under some conditions the PdO layer does not need to be deposited upon a substrate of Pd. In the prior art, the thin film of PdO was formed on a substrate of Pd, which is expensive. As stated above, this film is a thicker film than the film of PdO which had been used previously in a pH electrode.

The advantages of the use of sputtered PdO in combination with evaporated Au or Pd connectors on a flat surface such as a Si chip which has been thermally oxidized to produce a layer of SiO is that the connectors can

be greatly miniaturized and produced in flat configuration using thin film fabrication techniques.

PROCESS OF PREPARATION

In accordance with this invention a thick film of PdO which is satisfactory as a pH sensor electrode is prepared by sputtering Pd in an atmosphere of oxygen. A thick film of PdO is deposited by sputtering in a reactive gas (oxygen).

Stoichiometric deposition at a 1:1 molar ratio is desirable. It is required to add oxygen as it is consumed during the sputtering which takes from 1/2 hour to 3 hours. The thick film of PdO is required in part to overcome problems of consumability.

EXAMPLE

A one micrometer thick film of PdO was deposited upon a substrate to form a pH electrode by reactively sputtering at room temperature on a variety of substrates. The substrates include ceramics such as $Al_2O_3$, $SiO_2$, $SiO_2$/Si, Pd/$SiO_2$ and Pd/ceramic.

The PdO film reacts with $H^+$ in solution according to the reaction

$$PdO+2H^++2e^- \longrightarrow Pd+2H_2O$$

$$\text{or } 2H^+ + 2e^- \rightleftarrows Pd + H_2O$$

The activities of PdO and Pd for the electrode are unity, because they are pure solids. Therefore, the pH response should be given by the Nernst equation in this form:

$$E = E^o - \frac{RT}{F}[pH]$$

where

E = measured zero current potential

$E^o$ = standard state potential

R = gas constant

T = degrees K

F = Faraday constant

Table I shows the relation between the different sputtering parameters and pH.

**TABLE I**

| Target Voltage Volts | Substrate Voltage | Oxygen Pressure Millitorr | PdO Response (mv/pH Change in pH Unit) | Deposition Rate Angs./Sec |
|---|---|---|---|---|
| -1500 | -50 | 30 | Unstable | 2.61 |
| -1500 | -50 | 15 | " | 4.0 |
| -800 | -150 | 30 | " | 0.82 |
| -1000 | -150 | 30 | 54.5 | 1.28 Good Condition |
| -1000 | -150 | 50 | 57.5 | 1.16 Ideal Condition |
| -1000 | -250 | 50 | 53.5 | 1.04 |
| -1000 | -150 | 50 | 38 | 6.93 |

Ideal = 59 (Nernstean calculated value) @ 25°C

ESCA (Electron Spectroscopy tor Chemical Analysis) was made on the films and the binding energy shift from the pure Pd were measured. These results were then compared with the pH response of the electrodes to pH buffer solutions. The best results giving the closest to the predicted 59mv/pH unit sensitivity were obtained when the shift was 1.2eV which corresponds to the formation of stoichiometric PdO.

The most sensitive parameters affecting the pH were the target voltage and the substrate (bias) voltage.

The best and most reproducible results were obtained when the target voltage was -1000 volts, the substrate voltage was -150 volts and the oxygen pressure was 50 millitorr.

The pH sensitivity is defined as $\frac{\Delta E}{\Delta pH}$ and in case ot the ideal Nernstean value is 59 mV/pH unit at 25°C.

The linearity of the voltage response was tested in standard commercially available buffer solutions of pH 3, 5, 7, and 9. A beaker and a potentiostat were employed.

Measuring the potential of the PdO electrode against Ag/AgCl liquid junction electrode, it remained stable over a period of days, and the electrode showed a consistent sensitivity of 55 mv/pH at 27°C over a wide range of testing conditions. PdO prepared by molten salt anodization treatment usually lasts only relatively briefly because it cannot be made thick. In addition, molten salt anodized PdO exhibits a change of potential with time due to the change of composition from pure PdO or PdO nitrate mix to $Pd_xO_y$ where X is greater than Y where $X \to 1$ and $Y \to 0$, i.e. X>>Y.

Thermally anodized PdO also can last only very briefly because of thinness and a similar change in potential for the same reasons.

Several sputtering conditions were investigated e.g. varying the target voltage, substrate voltage, $O_2$ pressure, deposition rate; and films sputtered under various conditions can be seen in the above table. They were evaluated for their pH response.

Where the metal has a plurality of valencies, the film produced will be understood to be for a single one of the valences in order that a single compound will be found in the stoichiometrically pure oxide.

CLAIMS

1. An electrode for monitoring an ionic species, said electrode being coated with a film of a metallic oxide, the improvement comprising said electrode having an exterior surface comprising a substantially pure stoichiometric film of said metallic oxide.

2. The electrode of Claim 1 wherein said oxide has been deposited by sputtering in a reactive atmosphere rich in oxygen.

3. The electrode of Claim 1 wherein said metallic oxide is a stoichiometrically pure metallic oxide of the $Me_xO_y$ composition where x and y are positive integers.

4. The electrode of Claim 1, 2 or 3, wherein said metallic oxide is deposited on a dielectric surface.

5. An electrochemical system including an electrode as claimed in any preceding claim for monitoring an ionic species of the system.

6. An electrochemical system in which a pH monitoring electrode is used for pH monitoring by measuring the potential relative to a standard reference electrode, said pH monitoring electrode being coated with a film of a metallic oxide of Pt, Rh, Ir, Pd, Os, Ru, Rb, Re, Rh, Ru, Mo and W or alloys thereof with each other or with other metals,

the improvement comprising said pH electrode having an exterior surface comprising a thin film of said metallic oxide which is at least about 0.25 micrometers thick and which is deposited on a dielectric substrate.

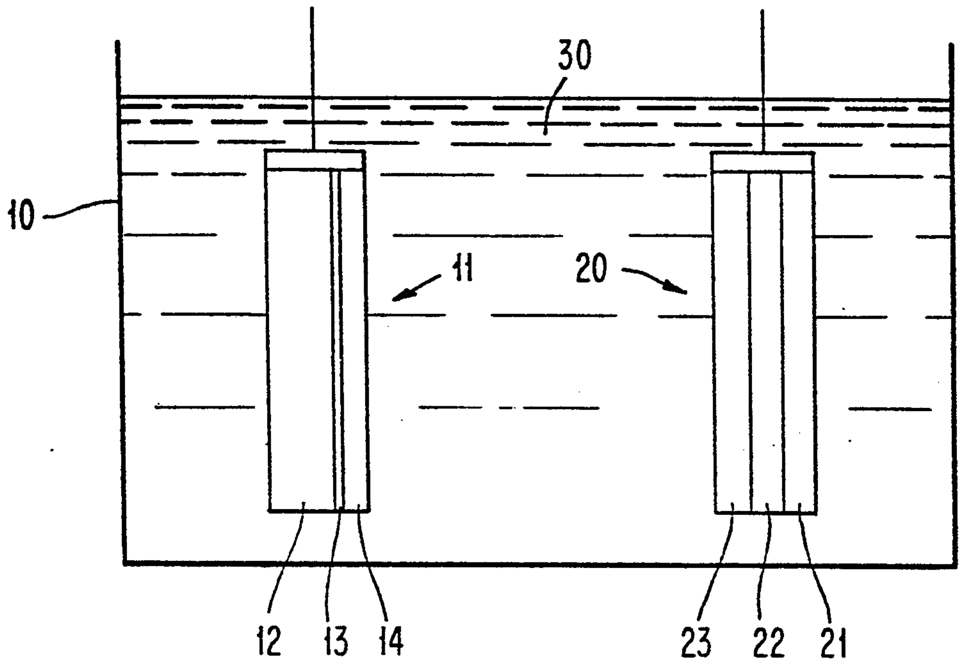

30
10
11
20
12
13
14
23
22
21